Europäisches Patentamt

European Patent Office

Office européen des brevets

(19)

(11) EP 0 734 833 A1

## (12) DEMANDE DE BREVET EUROPEEN

(43) Date de publication:
02.10.1996 Bulletin 1996/40

(51) Int Cl.$^6$: **B29C 45/14**

(21) Numéro de dépôt: 96400483.2

(22) Date de dépôt: 07.03.1996

(84) Etats contractants désignés:
AT BE DE ES FR GB IT

(30) Priorité: 30.03.1995 FR 9503770

(71) Demandeur: ELF ATOCHEM S.A.
F-92800 Puteaux (FR)

(72) Inventeur: Aubert, Yves
27300 Menneval (FR)

(74) Mandataire: Neel, Henry et al
Elf Atochem S.A.,
Dept. Propriété Industrielle,
La Défense 10,
Cedex 42
92091 Paris La Défense (FR)

(54) **Procédé de fabrication d'un objet en matière thermoplastique à décor protégé**

(57)     L'invention concerne un procédé de fabrication d'un objet en matière thermoplastique à décor protégé dans lequel:

a) on dépose à l'intérieur du moule sur la paroi un film transparent associé à un support, le dit support étant contre la paroi du moule, les couches se présentant dans l'ordre suivant : / support / film transparent / décor / adhésif hot melt,

b) on injecte dans le moule un thermoplastique,

c) on enlève par pelage le support.

**Description**

La présente invention concerne un procédé de fabrication d'un objet en matière thermoplastique à décor protégé et plus particulièrement les objets qu'on obtient par injection moulage.

L'art antérieur a déjà décrit des objets en matière synthétique ayant un décor protégé contre les chocs, les rayures ou la lumière.

FR 2 596 286 décrit un ski dont le dessus est recouvert d'un film bi couche, la couche côté ski est un polyamide-polyéther séquencé, l'autre couche est du polyamide 11, ces couches sont transparentes. Ce film peut être fixé sur le ski par pressage à chaud. La décoration s'effectue par transfert d'encres sublimables à partir d'une feuille contenant un décor réalisé avec ces encres et qu'on pose sur la couche de polyamide 11.

Le transfert des encres dans la couche de polyamide 11 se fait par chauffage. Pour assurer une meilleure luminosité du décor, on imprègne la couche de polyamide-polyéther séquencé avec des pigments blancs.

Selon une autre variante, on peut avant de coller ce film décorer le film de polyamide-polyéther séquencé, c'est-à-dire la face du côté du ski, par transfert d'encres sublimables puis ensuite le coller sur le ski.

On dépose des pigments blancs entre le ski et le film décoré.

Selon une autre variante, avant de coller le film bi couche sur le ski on le décore sur la face côté ski par sérigraphie, puis on le colle sur le ski. Dans ces trois modes de décoration, le décor est soit dans le film bi couche, soit sous le film bi couche. Cette technique ne peut convenir que pour des objets de forme simple.

EP 296 108 décrit un procédé de fabrication d'objets moulés et décorés. Il consiste à mettre dans un moule contre la paroi une feuille représentant un décor en encres sublimables puis au-dessus de cette feuille (c'est-à-dire allant vers l'intérieur du moule) un film en polyéther bloc amide.

Ensuite, on ferme le moule et on injecte un autre polyéther bloc amide à l'état fondu, il vient plaquer le film contre la feuille de décor et la paroi du moule. Sous l'effet de la chaleur, les encres passent dans le film, le film se colle contre la matière injectée. Au démoulage, il suffit de peler la feuille qui contenait les encres sublimables. On obtient un objet avec un décor dans l'épaisseur du film extérieur. Cette technique permet de faire des formes complexes, cependant, il est nécessaire d'utiliser une feuille avec le décor sublimable et un film qu'on doit disposer séparément dans le moule.

De plus, il est nécessaire de respecter certaines zones de température pour que les encres ne se subliment, ni trop vite ni trop lentement et que la matière injectée soit compatible avec le film qui va recevoir le décor par sublimation, et aussi que la température d'injection soit compatible avec la température de sublimation des encres.

La demanderesse a mis au point un procédé beaucoup plus simple. La présente invention est un procédé de fabrication par injection d'un objet en matière thermoplastique à décor protégé dans lequel :

a) on dépose à l'intérieur du moule sur la paroi un film transparent associé à un support le dit support étant contre la paroi du moule, les couches se présentant dans l'ordre suivant : / support / film transparent / décor / adhésif hot melt / ;
b) on injecte dans le moule un thermoplastique ;
c) on enlève par pelage le support.

Sous l'effet de la chaleur apportée par le thermoplastique durant son injection et de sa pression sur les parois du moule et donc sur le film transparent avec son décor le hot melt assure l'adhérence du film avec le décor sur l'objet.

L'adhésif hot melt assure une très bonne adhérence entre l'objet et le décor et possède un effet barrière en excluant toute diffusion des additifs dans le motif décoratif.

Le support peut être un carton revêtu de polyéthylène ou de silicone sur une ou deux faces. On a obtenu de bons résultats avec un carton de grammage 160 g/$m^2$ d'épaisseur 0,180 mm couché polyéthylène sur les deux faces (réf. JAC ANTICOLL AC/G 160 fourni par la Société JAC FRANCE). A titre d'exemples de support, on peut encore citer les films de polyéthylène téréphtalate (PET) ou polybutylène téréphtalate (PBT) pouvant être siliconés sur une face comme le carton. Ces supports présentent une très bonne stabilité dimensionnelle, une bonne résistance à la déchirure et à la chaleur.

Le film transparent est avantageusement un thermoplastique ou un élastomère thermoplastique.

Le film transparent peut être en polyuréthanne, soit du type polyétheruréthane, soit du type polyesteruréthanne.

Le film transparent peut être aussi en polyester tel que le PET ou en PBT.

Si le film transparent et ce support sont dans la même matière, il est recommandé de siliconer le support pour éviter une trop forte adhésion et ainsi faciliter le pelage après le démoulage.

Ce film transparent peut aussi être en polyamide.

On entend par polyamide les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de certains de ces monomères ce qui conduit à des copolyamides, par exemple le PA-6/12 obtenu par condensation du caprolactame et du lauryllactame.

On peut utiliser des mélanges de polyamide. On utilise avantageusement le PA 11 et le PA 12.

Le film transparent peut être aussi en un mélange de polyamide et de polyoléfines à matrice polyamide.

Le polyamide de la matrice peut être choisi parmi les polyamides des précédents et avantageusement parmi le polyamide 6 (PA-6) ou le polyamide 6,6 (PA-6,6).

On entend par polyoléfines des polymères comprenant des motifs oléfines tels que par exemple des motifs éthylène, propylène, butène-1, etc....

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène / styrène (SEBS) éventuellement maléisés.

On peut utiliser des mélanges de deux ou plusieurs de ces polyoléfines.

On utilise avantageusement :

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride malique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyamide formant la matrice peut être comprise entre 55 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).

Avantageusement, le film transparent comprend une matrice de polyamide 6 (PA-6) ou 66 (PA-6,6) dans laquelle sont dispersés, soit des nodules d'un mélange de polyéthylène ou d'un copolymère de l'éthylène et d'une alphaoléfine et de copolymère d'éthylène de (méth)acrylate d'alkyl et d'anhydride maléique ou de méthacrylate de glycidyle, soit des nodules de polypropylène.

De tels produits sont décrits dans les brevets US 5 070 145 et EP 564 338.

Dans le cas du polypropylène, on ajoute un compatibilisant qui est avantageusement un copolymère éthylène / propylène majoritaire en nombre de motifs propylène, greffé par l'anhydride maléique, puis condensé ensuite avec des oligomères mono aminés de caprolactame.

De tels mélanges de polyamide et de polyoléfine sont décrits dans le brevet US 5 342 886.

Le film transparent peut aussi être en un copolymère ayant des blocs polyamide et des blocs polyéther.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques ou de diacides carboxyliques et diamines en présence d'un diacide carboxylique limiteur de chaîne.

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polyéthers diols peuvent être du polyéthylène glycol (PEG), du polypropylène glycol (PPG) ou du polytétraméthylène glycol (PTMG).

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Ces polymères à blocs polyamides et polyéthers sont décrits dans les brevets US 4 331 786, US 4 115 475, US 4 195 015, US 4 839 441, US 4 864 014, US 4 230 838 et US 4 332 920.

On peut utiliser des copolymères à blocs de PA-12 et PTMG d'épaisseur 20 à 900 μm.

On utilise avantageusement des copolymères de dureté shore D inférieure à 55.

Le film transparent peut être aussi (i) un mélange de polyamide et de copolymère à blocs polyamide et blocs polyéther ou (ii) un mélange de ces copolymères à blocs polyamide et blocs polyéther avec des polyoléfines, en particulier, celles qu'on a cité dans les mélanges de polyamide et de polyoléfines à matrice polyamide. Le film transparent peut être aussi un mélange de tous les polymères et copolymères qu'on a déjà cités pour sa composition.

Le film transparent peut être avantageusement un mélange du copolymère à blocs polyamides et blocs polyéther avec au moins un produit choisi parmi les copolymères éthylène / (méth)acrylate d'alkyl, les copolymères éthylène/ (méth)acrylate d'alkyle / anhydride maléique ou les copolymères éthylène / acétate de vinyle.

Ce choix de matériau du film transparent dépend de la rigidité de l'objet final.

Selon une forme avantageuse de l'invention, on effectue l'extrusion du film transparent sur le support.

Le support est éventuellement siliconé pour éviter une très forte adhérence. Puis, il faut pouvoir facilement ôter le support après le moulage. Cependant, il faut une adhérence suffisante pour pouvoir faire l'impression du décor. Un avantage de l'invention est la facilité de l'impression en particulier dans le cas de plusieurs couleurs, ceci est dû à la stabilité dimensionnelle du support.

Le rôle du film transparent est de permettre une excellente visualisation du décor tout en assurant une parfaite protection contre tous risques d'abrasion ou de détérioration. Des épaisseurs de films de 20 à 900 μm semblent un bon compromis entre la transparence et la protection du motif. Cependant, des épaisseurs supérieures peuvent très bien convenir. L'impression du décor sur le fim transparent est réalisée par une des techniques habituelles d'impression : off set - héliogravure - tampographie - sérigraphie - sublimation, etc....

Ces techniques nécessitent généralement plusieurs passages d'encres avec séchage intermédiaire soit en étuve, soit à l'air ambiant, soit par U.V., et imposent au film et à son support une parfaite stabilité dimensionnelle pour l'obtention d'une bonne reproduction du décor.

Cette impression du décor se fera "en envers" de telle sorte que sa visualisation se face en final à travers le film transparent.

A titre d'exemple, on a utilisé les encres suivantes :

- Encre fournie par la Société SUN CHEMICAL - "SUNTEC"

   Impression 1 encre avec séchage en étuve à 80° C pendant 1 à 2 minutes.

   Réf. encres :        - Métropole II 90040 noir,
                        - Métropole MF 1156 noir.

- Encre fournie par la Société SERICOL

   Impression 3 passages encres sur maille 77 et 90 avec séchage air libre ou air chaud.

   Réf. encres :        - Flexitex FE + 5 % catalyseur EZ 444,
                        - Nylotex NX + 5 % catalyseur NB 386,
                        - Nylotex NX.

Après séchage, des couches successives d'encre, application d'une colle hot melt assurant l'adhérence entre le décor et la matière injectée. Le type de colle sera fonction du thermoplastique injecté et de sa température de transformation.

L'application du hot melt peut s'effectuer sous forme de film contre-collé ou de pâte liquide, le solvant étant évaporé en étuve.

Des pressions d'injection élevées et des points d'injection positionnés, de telle sorte que la matière injectée puisse frapper directement le décor, peuvent engendrer une déformation du motif décoratif. Une protection est donc souhaitable. Ce rôle sera assuré par le hot melt.

A titre d'exemple de hot melts, on peut citer ceux à base de copolymère éthylène / acétate de vinyle (EVA), ils sont formulés avec des résines tackifiantes, des cires, des charges.... On peut citer aussi les hot melts à base de copolymères à blocs polyamides et blocs polyéther décrits dans les brevets EP 179 700 et EP 197 845. On peut encore citer les produits utilisés comme liants de coextrusion tels que les polyoléfines homo ou copolymères greffées ou copolymérisées avec des fonctions réactives.

Le hot melt déposé sur le décor permet aussi de protéger le décor et le film transparent des chocs thermiques pouvant se produire lors de l'injection du thermoplastique.

Quand le film transparent est en copolymère à blocs polyamides et blocs polyéther, on a obtenu de bons résultats avec les hot melts suivants :

- XIROCOLL 3450 sur base copolyamide,
- XAF 2700 sur base EVA,
- PUROL

(ces produits provenant de la société SARNATECH-XIRO)

Le découpage de l'ensemble formé par le support et le film transparent avec le décor et le hot melt peut se faire par tout moyen.

Par exemple, on peut utiliser une découpe par emporte pièce. Une presse ALPI à 30 tonnes réglée à 15 tonnes a donné de bons résultats.

Le thermoplastique qu'on injecte dans le moule est choisi en fonction de l'objet décoré qu'on veut fabriquer. Il est recommandé de choisir les thermoplastiques qu'on injecte, les films transparents, les supports et les hot melts en fonction aussi de la température de transformation ; des conditions d'injection de la taille du moule. L'homme de métier peut choisir tous ces paramètres.

Les températures de fusion du thermoplastique, du hot melt, du film transparent ainsi que les temps de mise en contact, la forme du moule, etc. doivent être tels que le film avec le décor se colle sur le thermoplastique.

A titre de thermoplastique, on peut citer les polyoléfines, les polyesters, les polyamides, les copolymères à bloc polyamide et boc polyéther, les polyuréthannes ou des mélanges de ces produits, ou encore leurs mélanges avec des élastomères. On ne sortirait pas du cadre de l'invention si ce thermoplastique était réticulé. Par exemple, des mélanges contenant des copolymères éthylène / (méth)acrylate d'alkyle / anhydride maléique et des copolymères éthylène / (méth)acrylate d'alkyle / méthacrylate de glycidyle peuvent être réticulés par un catalyseur au cours de l'injection.

On peut encore citer les mélanges contenant des élastomères oléfiniques insaturés tels que de l'EPDM. Ces compositions sont décrites dans les brevets EP 343 024, EP 342 067, FR 2 629 465, US 5 208 292 et EP 204 790.

Des combinaisons avantageuses pour le procédé de l'invention sont celles dans lesquelles :

- le support est du carton,
- le film transparent est à base de copolymère à blocs polyamide et blocs polyéther,
- le thermoplastique injecté est à base de polyamide ou copolymères à blocs polyamide et blocs polyéther.

## Revendications

1. Procédé de fabrication par injection d'un objet en matière thermoplastique à décor protégé dans lequel :

   a) on dépose à l'intérieur du moule sur la paroi un film transparent associé à un support, le dit support étant contre la paroi du moule, les couches se présentant dans l'ordre suivant : / support / film transparent / décor / adhésif hot melt,
   b) on injecte dans le moule un thermoplastique,
   c) on enlève par pelage le support.

2. Procédé selon la revendication 1 dans lequel le support est choisi parmi le carton, le polyéthylène téréphtalate ou le polybutylène téréphtalate.

3. Procédé selon la revendication 1 ou 2 dans lequel le film transparent est en polyuréthanne, en polyester, en polyamide, en mélange de polyamides et de polyoléfines à matrice polyamide, en copolymère à blocs polyamides et blocs polyéther, en mélange de polyamide et de copolymère à blocs polyamide et blocs polyéther ou en mélange de ces copolymères à blocs polyamide et blocs polyéther avec des polyoléfines.

4. Procédé selon l'une des revendications 1 à 3 dans lequel le thermoplastique est choisi parmi les polyoléfines, les polyesters, les polyamides, les copolymères à blocs polyamide et blocs polyéther, les polyuréthannes ou des mélanges de ces produits.

Office européen
des brevets

**RAPPORT DE RECHERCHE EUROPEENNE**

Numero de la demande
EP 96 40 0483

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int.Cl.6) |
| X | PATENT ABSTRACTS OF JAPAN vol. 13, no. 67 (M-798) [3415] , 15 Février 1989 & JP-A-63 270123 (NIKON CORP), 8 Novembre 1988, | 1 | B29C45/14 |
| Y | * abrégé * | 3,4 | |
| X | US-A-4 369 157 (CONNER FRANCIS J) 18 Janvier 1983 * le document en entier * | 1 | |
| X | PATENT ABSTRACTS OF JAPAN vol. 12, no. 142 (M-692) [2989] , 30 Avril 1988 & JP-A-62 263013 (DAINIPPON PRINTING CO LTD), 16 Novembre 1987, * abrégé * | 1,2 | |
| X | PATENT ABSTRACTS OF JAPAN vol. 6, no. 228 (M-171) [1106] , 13 Novembre 1982 & JP-A-57 129731 (MATSUSHITA DENKI SANGYO KK), 11 Août 1982, * abrégé * | 1 | DOMAINES TECHNIQUES RECHERCHES (Int.Cl.6) B29C |
| X | US-A-5 049 337 (KATAGIRI SHINGO ET AL) 17 Septembre 1991 * colonne 3, ligne 33 - ligne 62; figure 7 * | 1,2 | |
| Y | EP-A-0 419 001 (GENERAL MOTORS CORP.) 27 Mars 1991 * le document en entier * | 3,4 | |

Le présent rapport a été établi pour toutes les revendications

| Lieu de la recherche | Date d'achèvement de la recherche | Examinateur |
|---|---|---|
| LA HAYE | 26 Juin 1996 | Bollen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)